Europäisches Patentamt

European Patent Office

Office européen des brevets

(11) Publication number: 0 388 071

A1

# EUROPEAN PATENT APPLICATION

(21) Application number: 90302427.1

(22) Date of filing: 07.03.90

(51) Int. Cl.⁵: **A01K 43/00, B08B 3/10**

(30) Priority: **11.03.89 GB 8905616**

(43) Date of publication of application:
**19.09.90 Bulletin 90/38**

(84) Designated Contracting States:
**BE DE DK ES FR GB GR IT NL SE**

(71) Applicant: **UFF ENTERPRISES LIMITED
Enterprise House, Scotshawbrook, Branch
Road**

**Darwen, Lancashire, BB3 0PR(GB)**

(72) Inventor: **Palmer, Raymond Leslie
Frogmore, Frogmore lane, Fen End
Nr. Kenilworth, Warwickshire, CV8 1NT(GB)**

(74) Representative: **Makovski, Priscilla Mary
BARKER, BRETTELL & DUNCAN 138 Hagley
Road
Edgbaston Birmingham B16 9PW(GB)**

(54) Egg-cleaning apparatus and method.

(57) Egg-cleaning apparatus cleans eggs travelling on conveyors (1) at a cleaning station (2), using a solution of water and cleaning agent. To ensure that the solution does not become contaminated by over-use, the apparatus includes a treatment station (4) for treating used solution to recover the water, and all the solution passing from the cleaning station (2) is supplied to the treatment station (4), with the recovered water only being re-circulated in the apparatus. The apparatus has means (11) for analysing the number and condition of the eggs coming into the apparatus on the conveyors (1), and means in the form of a microprocessor (5), for calculating and then controlling the appropriate formulation for the solution, the flow rate of the solution through the cleaning station (2) and the conveyor speed.

EP 0 388 071 A1

## EGG-CLEANING APPARATUS AND METHOD

This invention relates to egg-cleaning apparatus in which eggs travelling on conveyor means are cleaned at a cleaning station by a solution of water and cleaning agent, and to a method of cleaning eggs.

The idea cleaning the eggs is not only to remove the visible dirt from them, but also to destroy bacteria and other micro-organisms which are always present on the shell, and which, if not destroyed, can multiply and penetrate the shell, resulting in internal contamination of the egg.

In known egg-cleaning apparatus the cleaning agent is a combination of detergent and bactericide, and the solution is sprayed onto the eggs to clean them. The used solution is filtered to remove solid particles, and is then re-circulated through the apparatus. If a fresh supply of the solution is not provided at the appropriate time, the solution will be overused, so that it becomes contaminated with bacteria. As a result, the eggs cleaned in an overused solution may actually have more bacteria after cleaning than they had before cleaning. To try to avoid this problem, the solution may be overenriched with the cleaning agent to start with, which can be wasteful. A further problem is that the used solutions have high levels of cleaning agent and/or bacteria and so require careful treatment and disposal if pollution is to be avoided.

According to a first aspect of the present invention, egg-cleaning apparatus in which eggs travelling on conveyor means are cleaned at a cleaning station by a solution of water and cleaning agent, includes a treatment station for treating used solution to recover the water, and all the solution passing from the cleaning station is supplied to the treatment station, with the recovered water only being re-circulated in the apparatus.

This ensures that the solution cannot be overused, and become contaminated. The solution can also have the appropriate formulation for efficient cleaning of the eggs, so that waste is avoided. Further, the used solution is easier to treat, as the levels of cleaning agent and bacteria will not be excessive, so disposal is easier.

The formulation of the solution, the flow rate through the cleaning station and the speed of the conveyor means may all be varied, in accordance with the number and condition of the eggs to be cleaned, in order to provide efficient cleaning. Any or all of these variables may be controlled by an operator, or automatically. Conveniently the apparatus includes means for analysing the number and condition of the eggs coming into the apparatus on the conveyor means, and for calculating the appropriate formulation for the solution, the flow rate and the conveyor speed.

Preferably the apparatus includes a water reservoir, means for heating the water and means for adding the cleaning agent and supply pipe means for supplying the solution to outlets in the cleaning station. The outlets may comprise spray or knife cleaning nozzles, as appropriate.

Heaters are provided in the supply pipe means to ensure that the correct temperature is attained. The means for adding the cleaning agent may comprise dosage pumps in the supply pipe means, to add a predetermined amount of cleaning agent to the water. The cleaning agent preferably includes detergents and bactericides. The flow rate of the solution through the cleaning station is controlled by pressure pumps provided in the supply pipe means, and by regulator valve means downstream of the nozzles. The dosage pumps, pressure pumps and valve means are set in accordance with the values obtained from the analysing means and calculating means. The used solution is collected and pumped to the treatment means, from where the recovered water is returned to the reservoir at an output rate dependent on the flow rate of the solution.

The apparatus may also include monitoring means for monitoring the conveyor speed, the formulation and temperature of the solution, and the flow and output rates. Signals from the monitoring means may be used as feedback controls to ensure that these variables remain at the correct values. This enables the apparatus to operate wholly automatically. Conveniently, the calculating means comprises a microprocessor, responsive to signals from the analysing and monitoring means, and able to control the variables in accordance with the conditions and the feedback signals.

According to a second aspect of the invention, a method of cleaning eggs travelling on conveyor means comprises the steps of making a cleaning solution of water and cleaning agent, cleaning the eggs with the solution, collecting the used solution, treating the used solution to recover the water, and re-circulating the recovered water into the cleaning solution.

The method has the advantage of providing efficient cleaning of the eggs as well as re-using the water, and making disposal of the waste part of the used solution easier.

The step of making the cleaning solution preferably includes taking water from a reservoir, heating it and adding the cleaning agent, while the step of cleaning the eggs includes supplying the solution to outlets of a cleaning station. The step of re-circulating the recovered water comprises returning it to the reservoir.

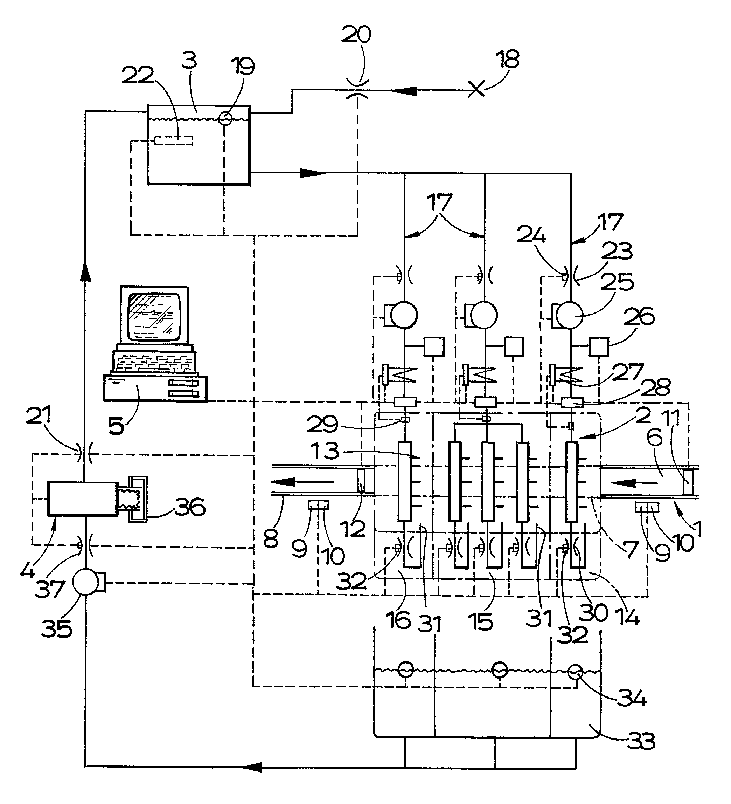

An embodiment illustrating both aspects of the present invention is shown, by way of example, in the accompanying drawings, of which the single Figure is a schematic diagram of egg-cleaning apparatus.

In the egg-cleaning apparatus shown in the diagram eggs travelling on conveyor means 1 are cleaned at a cleaning station 2 by a solution of cleaning agent in water from a reservoir 3, the water being recovered from the used solution at a treatment station 4 and returned to the reservoir 3 for re-circulation through the apparatus. A microprocessor 5 is provided to set and control the speed of the conveyor means 1, the formulation of the solution and the flow rates to and from the reservoir 3, in accordance with the number of eggs to be cleaned and their condition, and feedback signals from monitoring means which monitor the various parts of the apparatus. The dotted lines in the diagram show the control and/or monitoring connections between the various parts and the microprocessor 5.

The conveyor means 1 comprises an input conveyor belt 6 onto which eggs taken from laying batteries or nesting-boxes are marshalled. The eggs are transferred to a cleaning conveyor belt 7 which takes them through the cleaning station 2, and they are then transferred to an output conveyor belt 8 to be taken to a further stage in the process. This avoids any contamination of the output belt 8. Each belt is driven by a variable speed electric motor (not shown) which is controlled by the microprocessor. The speed of each conveyor belt is monitored by a tachometer 9, which measures the actual speed of the belt, and an encoder 10 which measures its position. Each tachometer 9 and encoder 10 sends feedback signals to the microprocessor 5. The input conveyor belt 6 also has an input analyser 11, which scans the belt to analyse the number and condition of the eggs travelling towards the cleaning station 2. This information is fed to the microprocessor 5, which uses it to control the apparatus. A similar output analyser 12 is provided on the output conveyor belt 8.

The cleaning station 2 is divided into three chambers, in each of which the solution is sprayed onto the eggs through outlet nozzles 13. The solution is different for each chamber. The first chamber 14 provides an axial and tangential spray to soak the eggs, softening adhered debris. The second chamber 15 has three sets of nozzles 13, which spray a detergent solution. The first set cleans by a swirl pattern, the second set comprises knife nozzles which cleave away persistent debris, and the third set again cleans by a swirl pattern. In the third chamber 16 the eggs are sprayed with a bactericidal solution. The nozzles 13 for each chamber are supplied from the reservoir 3 through their own supply pipe means 17.

The reservoir 3 itself is fed from a mains water supply 18 and from the treatment station 4, through solenoid-operated valves (not shown) controlled by a water level detector 19. The pressure and flow of the mains supply 18 is monitored by a transducer 20, and that of the output from the treatment station 4 by a transducer 21. The reservoir 3 also includes a pH analyser 22 to measure the acidity or alkalinity of the water, enabling the microprocessor to control the formulation of the solutions, in particular the detergent solutions, accordingly.

The water from the reservoir 3 is supplied to the supply pipe means 17. Each has a pressure regulator 23, which can be controlled by the microprocessor 5 to supply the required amount of water to each supply pipe means 17, and includes a pressure/flow measuring transducer 24 which provides monitoring signals to the microprocessor 5. The water passes from the pressure regulator 23 to a pressure pump 25, which again is controlled by the microprocessor 5. A dosage pump 26 then meters the appropriate amount of cleaning agent into the water, again under the control of the microprocessor 5. The water then passes through a heater 27, the output of which is set by the microprocessor. Before reaching the nozzles 13 the solution passes through a formulation analyser 28, which takes conductivity and/or resistivity measurements to monitor the solution and provide feedback signals to the microprocessor 5, and over a thermal transducer 29 which measures the temperature and provides a feedback signal to the heater 27 itself. A regulating valve 30, controlled by the microprocessor 5, is located downstream of the nozzles 13 and regulates the flow through them by controlling the amount of solution that flows out through a downstream outlet 31. A pressure/flow transducer 32 is included to monitor the flow. This arrangement is known as metering-out, and has the advantage that it provides a substantially constant pressure upstream of the nozzles 13, and a substantially constant flow rate through the supply pipe means 17. The cleaning station 2 also includes fume extraction equipment (not shown), to cope with the chlorine vapours which will usually be generated in the cleaning process.

Solution passing through the nozzles 13 and outlets 31 is collected in a tank 33, which includes water level detectors 34. It is then pumped, by a pump 35 controlled by the microprocessor 5, to the treatment station 4 where the water is recovered. The effluent is placed in an effluent tank 36 for disposal. The input flow and pressure to the treatment station 4 are monitored by a transducer 37. The rates of flow into and out of the treatment station 4 are controlled in dependence on the flow rate through the cleaning station 2.

The microprocessor 5 holds in its memory the optimum conveyor speeds, solution formulations and temperatures, and solution flow rates for cleaning a given number of eggs in a given condition. When the apparatus is to be used, the input analyser 11 analyses the incoming eggs, and from this information the microprocessor 5 chooses the correct rates, and sets the appropriate conveyor speeds, formulations, temperatures and flow rates by setting the electric motors, pressure regulators 23, pumps 25 and 26, heaters 27 and regulating valves 30. The treatment station flow rates are also set in accordance with the total flow rate through the cleaning station 2.

The apparatus is then started, so that the water from the reservoir 3 is pressurised, the cleaning agents are added, and the solution is then heated and sprayed onto the eggs to clean them. Used solution is supplied to the treatment station 4, with purified water returning to the reservoir 3 for recirculation. Any shortfall in the returning water, due to spillage, evaporation and the like is made up by water from the mains supply 18. The correct rates chosen by the microprocessor 5 are maintained by it in accordance with the monitoring signals from the monitoring means to provide feedback control. For example, the signals from the formulation analysers 28 are used to control the dosage pumps 26, and these may also be controlled by any flow or pressure variations detected by the transducers 24. The flow rate to the nozzles 13 is controlled by regulating valves 30 in response to signals from the regulating transducers 31. The temperature of the solutions is controlled by the heaters 27, using feedback from the thermal transducers 29. The conveyor speeds are controlled by the electric motors in response to the encoder and tachometer signals. Further feedbacks operate as necessary to keep the apparatus in balance. However, if a situation arises where the apparatus is unable to compensate, the microprocessor 5 will shut down altogether.

The microprocessor 5 is also able to control the apparatus to adapt to changes in the number or condition of the incoming eggs, by changing the rates which were set initially. Thus, if fewer eggs arrive the conveyor belts may be speeded up, or if an empty section is detected by the input analyser 11 the cleaning process may be stopped until more eggs arrive. If the incoming eggs are themselves dirtier, or cleaner, the solutions and flow rates may be altered accordingly.

The microprocessor 5 can also of course provide information on the process to the operator.

The apparatus is therefore efficient, as it produces clean eggs, using a minimum amount of cleaning agent and water, but enabling easy disposal of the effluent, which will never be heavily contaminated. It is particularly efficient because it operates automatically. If required some or even all of its operations could be performed manually, although the efficiency would then suffer.

In a modification, not shown, the reservoir 3 may include a heater, an agitator and a thermostat. These are used on initial operation of the apparatus to pre-heat the water, so that the heaters 27 then need to provide only a small amount of heat to maintain the temperature of the solution.

## Claims

1. Egg-cleaning apparatus in which eggs travelling on a conveyor means (1) are cleaned at a cleaning station (2) by a solution of water and cleaning agent, characterised in that the apparatus includes a treatment station (4) for treating used solution to recover the water, and all the solution passing from the cleaning station (2) is supplied to the treatment station (4), with the recovered water only being re-circulated in the apparatus.

2. Egg-cleaning apparatus according to claim 1, in which the apparatus includes means (11) for analysing the number and condition of the eggs coming into the apparatus on the conveyor means (1), and means (5) for calculating the formulation of the solution, the flow rate of the solution through the cleaning station (2) and the speed of the conveyor means (1).

3. Egg-cleaning apparatus according to claim 1 or claim 2, in which the apparatus includes a water reservoir (3), heating means (27) for heating the water, and means (25) for adding the cleaning agent to the water, and supply pipe means (17) for supplying the solution to outlets (13) in the cleaning station (2).

4. Egg-cleaning apparatus according to claim 3, in which the heating means comprises heaters (27) provided in the supply pipe means (17).

5. Egg-cleaning apparatus according to claim 3 or claim 4, in which the means for adding the cleaning agent to the water comprises dosage pumps (26) provided in the supply pipe means (17).

6. Egg-cleaning apparatus according to any of claims 3 to 5, in which the flow rate of the solution through the cleaning station (2) is controlled by pressure pumps (25) in the supply pipe means (17), and by regulator valve means (30) downstream of the outlets (13).

7. Egg-cleaning apparatus according to any of claims 3 to 6, in which the outlets (13) comprise cleaning nozzles.

8. Egg-cleaning apparatus according to any of claims 3 to 7, in which the used solution passing from the cleaning station (2) is collected and pumped to the treatment station (4), the recovered water then being returned to the reservoir (3) at a rate dependent on the flow rate of the solution through the cleaning station (2).

9. Egg-cleaning apparatus according to any preceding claim, in which the apparatus includes monitoring means (9,28,29,32,37) for monitoring the speed of the conveyor means (1), the formulation and temperature of the solution, and the flow rate of the solution and the recovered water, signals from the monitoring means being used as feedback controls for these variables.

10. Egg-cleaning apparatus according to claim 2 and claim 9, in which the calculating means (5) comprises a microprocessor responsive to signals from the analysing means (11) and the monitoring means (9,28,29,32,37) to control the variables automatically.

11. A method of cleaning eggs travelling on conveyor means (1) comprising the steps of making a cleaning solution of water and cleaning agent, cleaning the eggs with the solution, collecting the used solution, treating the used solution to recover the water, and re-circulating the recovered water into the cleaning solution.

12. The method of claim 11, in which the step of making the cleaning solution includes taking water from a reservoir (3), heating it and adding the cleaning agent, and the step of cleaning the eggs includes supplying the solution to outlets (13) of a cleaning station (2).

## DOCUMENTS CONSIDERED TO BE RELEVANT

EP 90302427.1

| Category | Citation of document with indication, where appropriate, of relevant passages | Relevant to claim | CLASSIFICATION OF THE APPLICATION (Int. Cl.⁵) |
|---|---|---|---|
| A | US - A - 3 360 817 (HALVERSON) * Column 6, line 45 - column 9, line 25; column 10, line 71 - column 13, line 75 * | 1,3,5, 11,12 | A 01 K 43/00 B 08 B 3/10 |
| A | US - A - 4 724 854 (KUHL) * Column 2, lines 47-51; column 6, lines 61-63; fig. 2 * | 1,3, 11,12 | |
| A | GB - A - 1 126 312 (CATHCART) * Page 3, lines 15-27 * | 1,3, 11,12 | |
| A | DE - A - 2 044 860 (HENNINGSEN FOODS, INC) * Fig. 3; page 7, lines 4-8 * | 1 | |
| A | US - A - 3 882 769 (WEBER et al.) | | TECHNICAL FIELDS SEARCHED (Int. Cl.⁵) |
| A | US - A - 4 125 914 (WARREN) | | A 01 K A 23 B B 08 B |

The present search report has been drawn up for all claims

| Place of search | Date of completion of the search | Examiner |
|---|---|---|
| VIENNA | 11-05-1990 | FESSLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82